# FASCICULE DE BREVET EUROPEEN

(11) **EP 4 632 249 B1**
(45) Date de publication et mention de la délivrance du brevet: **12.08.2026**
(21) Numéro de dépôt: 25161178.6
(22) Date de dépôt: 02.03.2025
(51) Int. Cl.: F16H 25/22

(54) **RECIRCULATEUR D'EXTRÉMITÉ POUR MÉCANISME DE VIS À BILLES**
ENDREZIRKULATOR FÜR KUGELGEWINDEMECHANISMUS
END RECIRCULATING DEVICE FOR BALL SCREW MECHANISM

(30) Priorité: 28.03.2024 FR 2403161
(43) Date de publication de la demande: 15.10.2025
(73) Titulaire: NTN Europe, 74000 Annecy (FR)
(72) Inventeur: BERTHIER, Julien, 74410 SAINT JORIOZ (FR)
(74) Mandataire: Alatis

(56) Documents cités:
- WO-A1-2023/188058
- FR-A- 1 398 059
- US-A- 3 170 336

## Description

### DOMAINE TECHNIQUE DE L'INVENTION

L'invention se rapporte au domaine technique des vis à billes, et plus particulièrement aux recirculateurs de vis à billes dont la recirculation est externe.

### ÉTAT DE LA TECHNIQUE ANTÉRIEURE

Dans le document CN 217481881 est présenté un mécanisme de vis à billes, dont la recirculation externe des billes se fait au moyen de deux recirculateurs d'extrémité positionnés aux deux extrémités de l'écrou, et reliés par un canal de recirculation parallèle à l'axe de la vis. Les recirculateurs d'extrémité divulgués dans ce document présentent, en plus de leur faculté à rediriger les billes lors de leur recirculation à travers un canal de recirculation, la caractéristique de retenir la graisse à l'intérieur de l'espace annulaire situé entre l'écrou et la vis.

L'un des inconvénients de tels recirculateurs d'extrémité est l'encombrement axial qu'ils génèrent, car les deux fonctions de guidage des billes et de retenue de la graisse sont réalisées par des zones distantes axialement l'une de l'autre. Ces recirculateurs ne peuvent donc être utilisés que dans des mécanismes de vis à billes dont les applications ne nécessitent pas d'optimisation poussée de l'encombrement spatial.

Dans le document WO 2023 188 058 A1 est décrit un recirculateur selon le préambule de la revendication 1.

### EXPOSÉ DE L'INVENTION

L'invention vise à remédier aux inconvénients de l'état de la technique et à proposer une solution compacte et simple pour réaliser la recirculation d'un mécanisme de vis à billes.

Pour ce faire est proposé, selon un premier aspect de l'invention, un recirculateur pour un écrou d'un mécanisme de vis à billes, le recirculateur comprenant un corps annulaire autour d'un axe de référence du recirculateur destiné à être aligné avec un axe d'hélice de l'écrou, le corps annulaire comprenant une surface d'appui configurée pour venir en appui contre un écrou du mécanisme de vis à billes dans une direction d'appui ayant une composante axiale parallèle à l'axe de référence, et une structure de guidage configurée pour guider des billes dans une trajectoire de recirculation ayant une première extrémité de guidage configurée pour déboucher dans un canal de recirculation de l'écrou et à une deuxième extrémité de guidage sur un chemin de roulement défini par un filetage de l'écrou, la surface d'appui étant au moins partiellement située dans un plan de coupe coupant la trajectoire de recirculation et perpendiculaire à l'axe de référence, la deuxième extrémité de guidage de la structure de guidage s'étendant de part et d'autre du plan de coupe.

Le recirculateur permet d'assurer dans un volume restreint une surface de contact et d'appui importante avec l'écrou, permettant une bonne jointure entre le recirculateur et l'écrou, et le guidage des billes du mécanisme de vis à billes.

Suivant un mode de réalisation, la surface d'appui est plane, ce qui concourt à la compacité de la pièce, ainsi qu'à la simplification de la fabrication de ladite pièce. Alternativement, une surface d'appui tronconique est envisageable.

Suivant un mode de réalisation, la surface d'appui s'étend sur un secteur angulaire autour de l'axe de référence, qui est sans intersection avec la trajectoire de recirculation. On répartit ainsi les fonctions d'appui et de guidage des billes autour de l'axe de référence. De préférence, le secteur angulaire à un angle au sommet supérieur à π/2 radians, de préférence supérieur à 3π/4 radians, et inférieur à 3π/2 radians, de préférence inférieur à 5π/4 radians, par exemple 7π/6 radians.

Suivant un mode de réalisation, la structure de guidage est en saillie radialement vers l'extérieur du corps annulaire.

Suivant un mode de réalisation, la première extrémité de guidage de la structure de guidage est saillante, notamment axialement, par rapport au corps annulaire, pour réaliser une trajectoire de recirculation curviligne dont la première extrémité de guidage est en saillie axiale par rapport corps annulaire du recirculateur, de manière à déboucher dans le canal de recirculation de l'écrou.

Suivant un mode de réalisation, la deuxième extrémité de guidage de la structure de guidage est formée par une écope. De préférence l'écope est en saillie dans une direction configurée pour être tangente à un chemin de roulement de l'écrou. De cette manière, le recirculateur, par l'intermédiaire de l'écope, permet une recirculation des billes de manière fluide, afin de réaliser une transition douce, sans chocs, entre la trajectoire définie par le chemin de roulement de l'écrou et la trajectoire de recirculation ou une perte de rendement.

Suivant un mode de réalisation, la trajectoire de recirculation au niveau de la première extrémité de guidage est perpendiculaire au plan d'appui.

Suivant un mode de réalisation, le corps annulaire comprend une lèvre de joint s'étendant radialement vers l'intérieur depuis le corps annulaire du recirculateur, de préférence la lèvre de joint est de forme hélicoïdale, de préférence encore la lèvre de joint réalise au moins 1/2 tour d'hélice, de préférence au moins 3/4 de tour d'hélice. La lèvre de joint permet ainsi de former une contreforme d'un chemin de roulement de la vis et donc de limiter les fuites d'un lubrifiant nécessaire au bon fonctionnement du mécanisme de vis à billes, de la graisse par exemple.

Suivant un mode de réalisation, le recirculateur est monobloc, de préférence en plastique. Les matériaux pouvant être plastiques traditionnels, en plastique partiellement ou totalement recyclés ainsi que totalement ou partiellement biosourcés. Une réalisation métallique est également envisageable, par exemple par usinage ou frittage. De préférence, le recirculateur peut être moulé sans contre-dépouille, ce qui permet une fabrication par moulage et une diminution des coûts liés au temps de cycle ou à la complexité de réalisation des moules ou outillages. D'autres moyens de fabrication sont toutefois possibles, notamment par fabrication additive. Une réalisation multi-nuances et/ou multi matériaux n'est pas non plus exclue.

Suivant un autre aspect de l'invention, celle-ci a trait à un mécanisme de vis à billes comprenant une vis, présentant un chemin de roulement hélicoïdal intérieur et un axe central ; un écrou, présentant un chemin de roulement hélicoïdal extérieur et un canal de recirculation ; au moins deux billes disposées entre le chemin de roulement hélicoïdal intérieur de la vis à billes et le chemin de roulement hélicoïdal extérieur de l'écrou ; au moins un recirculateur d'extrémité disposé à l'une des extrémités axiales de l'écrou pour assurer la recirculation des billes, le recirculateur d'extrémité comprenant une surface d'appui contre l'écrou et une structure de guidage pour maintenir les billes dans une trajectoire de recirculation définie ; remarquable en ce que le recirculateur d'extrémité est tel que décrit ci-avant.

Suivant un mode de réalisation, l'extrémité axiale présente une surface d'accueil en contact avec la surface d'appui du recirculateur, la surface d'appui du recirculateur et la surface d'accueil de l'écrou présentant des géométries complémentaires, afin que le recirculateur puisse être lié à l'écrou et former un ensemble homogène.

Suivant un mode de réalisation, l'extrémité axiale comporte une jupe annulaire en saillie axiale par rapport à la surface d'accueil, la jupe annulaire et la surface d'accueil délimitant un volume dans lequel est logé au moins partiellement, et de préférence totalement, le corps annulaire du recirculateur, ce qui permet au recirculateur d'être inséré axialement dans l'écrou, protégé par ce dernier, et améliore la compacité et la liaison de l'ensemble formé par l'écrou et le recirculateur.

Suivant un mode de réalisation, l'extrémité axiale annulaire présente une encoche radiale dans la continuité du canal de recirculation afin de loger la structure de guidage dans une zone de guidage lorsque la structure de guidage est en position d'utilisation, et de ne pas avoir d'élément saillant par rapport à la surface extérieure de l'écrou excluant les risques d'accrochage lors de manipulations ou les pertes de compacités radiales.

Suivant un mode de réalisation, l'encoche forme une zone d'accueil formant au moins une face de guidage permettant une recirculation douce des billes entre le canal de recirculation et le recirculateur.

Naturellement, le mécanisme de vis à billes peut être équipé de deux recirculateurs selon le premier aspect de l'invention, situés aux deux extrémités axiales de l'écrou.

Suivant un mode de réalisation particulièrement avantageux, le recirculateur d'extrémité comporte une ou plusieurs faces de guidage faisant face à une ou plusieurs faces de guidage de l'écrou pour délimiter la trajectoire de recirculation entre les deux extrémités. En mettant à contribution le recirculateur d'extrémité et l'écrou pour délimiter la trajectoire de recirculation, on contribue à une meilleure compacité du mécanisme.

### BRÈVE DESCRIPTION DES FIGURES

D'autres caractéristiques et avantages de l'invention ressortiront à la lecture de la description qui suit, en référence aux figures annexées.
- [Fig. 1] La figure 1 illustre un mécanisme de vis à billes comportant une vis, un écrou et deux recirculateurs d'extrémité.
- [Fig. 2] La figure 2 illustre une vue en perspective isométrique de l'écrou.
- [Fig. 3A] La figure 3A illustre une vue en perspective isométrique du recirculateur d'extrémité.
- [Fig. 3B] La figure 3B illustre une vue du bas du recirculateur d'extrémité.
- [Fig. 3C] La figure 3C illustre une vue de face du recirculateur d'extrémité.
- [Fig. 3D] La figure 3D illustre une vue de l'arrière du recirculateur d'extrémité.
- [Fig. 3E] La figure 3E illustre une vue du haut du recirculateur d'extrémité.
- [Fig. 4] La figure 4 illustre une coupe axiale du mécanisme de vis à billes.

Pour plus de clarté, les éléments identiques ou similaires sont repérés par des signes de référence identiques sur l'ensemble des figures.

### DESCRIPTION DÉTAILLÉE DE MODES DE RÉALISATION

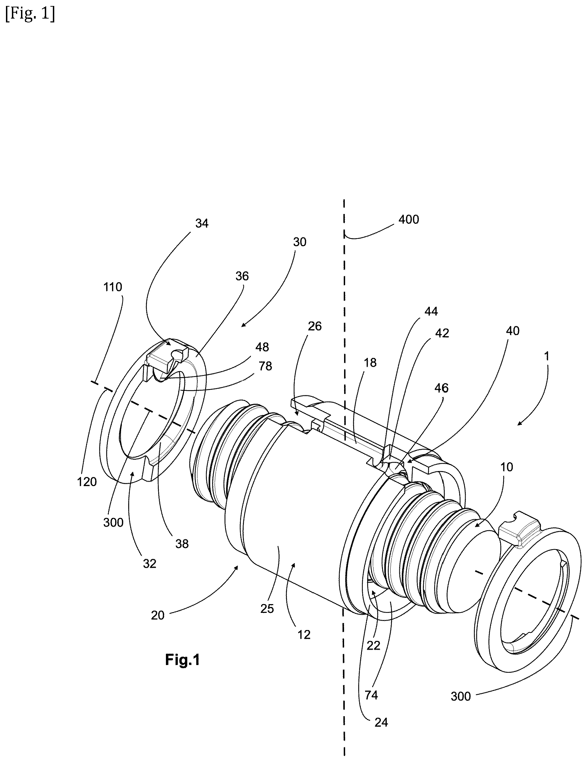

Sur la figure 1 est illustré un mécanisme de vis à billes **1** comportant deux composants filetés, à savoir une vis **10** et un écrou **12,** des billes ainsi que deux recirculateurs d'extrémité **30,** tous alignés sur un axe de référence **100** du mécanisme de vis à billes **1,** qui est aligné avec un axe de référence **110** de la vis **10,** un axe de référence **120** de l'écrou **12** et un axe de référence **300** de chacun des deux recirculateurs d'extrémité **30.**

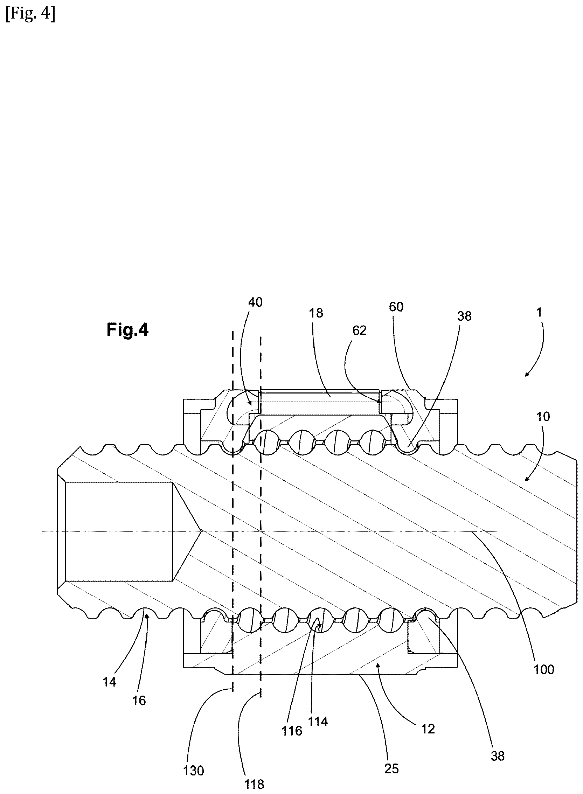

Le mécanisme de vis à billes **1,** tel qu'illustré sur les figures 1 et 4, sans les billes, présente un axe de symétrie **400** perpendiculaire à l'axe **100,** de sorte que la description qui sera faite du recirculateur **30** à une extrémité de l'écrou **12** sera transposable au recirculateur **30** à l'extrémité opposée de l'écrou. Mais cette symétrie est une simple option, et n'est pas limitative.

La vis **10** est de préférence métallique, par exemple en acier, et présente un filet de vis **14** qui forme un chemin de roulement hélicoïdal intérieur **16** autour de l'axe de référence **110** de la vis **10,** le chemin de roulement hélicoïdal intérieur **16** étant tourné radialement à l'opposé de l'axe de référence **110.**

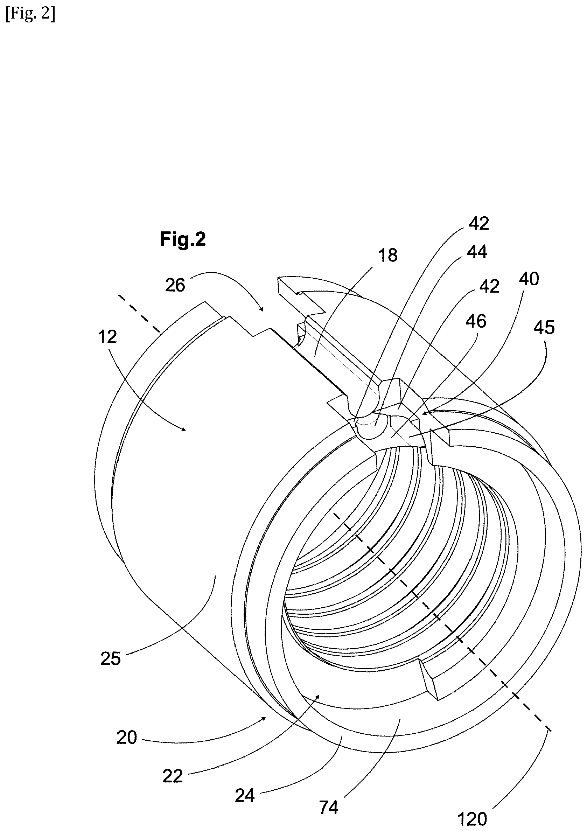

L'écrou **12,** illustré en détail sur les figures 2 et 4, est de préférence métallique, par exemple en acier, et est globalement de forme cylindrique. L'écrou **12** présente un filet d'écrou **114** qui forme un chemin de roulement hélicoïdal extérieur **116** autour de l'axe de référence **120,** tourné radialement vers l'intérieur, et une surface extérieure **25** tournée radialement vers l'extérieur. La surface extérieure **25** est cylindrique et traversée axialement par un canal de recirculation **18.** Le canal de recirculation **18** est situé radialement à distance du chemin de roulement **116** de l'écrou **12** et en enjambe de préférence plusieurs spires. Dans ce mode de réalisation, le canal de recirculation **18** est du type ouvert, autrement dit, il forme une rainure à la surface extérieure **25** de l'écrou **12,** mais cette configuration est optionnelle, et l'on peut alternativement prévoir un canal de recirculation **18** totalement ou partiellement fermé à sa périphérie radiale extérieure, selon les besoins de réalisation.

L'écrou **12** présente en outre deux extrémités axiales **20** opposées à deux extrémités axiales opposées du canal de recirculation **18.** Chacune des extrémités axiales **20** est annulaire et présente une surface d'accueil **22** et une jupe **24** annulaire, axialement en saillie vers l'extérieur par rapport à la surface d'accueil **22.** La jupe **24** présente un diamètre légèrement inférieur au diamètre de la surface extérieure **25,** qui peut par exemple servir à la fixation d'une bride de fixation pour un organe solidaire de l'écrou **12,** ou pour la fixation d'un soufflet d'étanchéité. La jupe **24** présente une face annulaire intérieure **74** tournée radialement vers l'axe de référence **120.** La surface d'accueil **22** ainsi que la jupe **24** sont configurées pour accueillir le recirculateur d'extrémité **30** et délimitent un volume de logement du recirculateur d'extrémité **30.** Chaque extrémité axiale **20** présente une encoche **26** radiale, limitée par le plan **118** de fin du canal de recirculation **18,** cette encoche **26** scindant la jupe **24** de sorte qu'elle ne forme plus qu'un arc de cylindre. L'encoche **26** engendre une zone d'accueil **40** dont la forme correspond à une contre-forme d'une structure de guidage **34** du recirculateur d'extrémité **30,** qui sera décrite plus bas.

Dans un autre mode de réalisation, le canal de recirculation **18** est fermé, autrement dit il est intégré dans l'écrou **12.** Le cas échéant, l'encoche **26** ne scinde pas la totalité de la jupe **24** de sorte que ladite jupe **24** soit annulaire.

La zone d'accueil **40,** formée dans l'écrou **12** par l'encoche **26,** comprend deux méplats de support **42** de part et d'autre d'une première face de guidage **44** de l'écrou **12** relié au canal de recirculation **18,** ainsi qu'une deuxième face de guidage **45** et un support d'écope **46.**

La surface d'accueil **22** forme un arc annulaire plan autour de l'axe de référence **120,** s'étendant depuis l'encoche **26** sur un secteur angulaire d'angle au sommet supérieur à π/2 radian, de préférence supérieure à 3π/4, et inférieure à 3π/2, de préférence inférieure à 5π/4, par exemple 7π/6, dans une direction horaire **210** ou antihoraire **220** de sorte à former une contre-forme d'une surface d'appui **36** décrite par la suite.

Les recirculateurs d'extrémité **30** sont composés de préférence de matière plastique, afin d'être monobloc tout en pouvant être fabriqués par moulage sans contre-dépouille, ce qui permet de diminuer les temps de fabrication de la pièce et de réduire les coûts. La matière plastique peut être un plastique traditionnel, un plastique partiellement ou totalement recyclé et/ou totalement ou partiellement biosourcé. Les recirculateurs d'extrémité **30** peuvent cependant, au besoin, être réalisés dans d'autres matériaux, en métal par exemple, le cas échéant avec une étape d'usinage et/ou de frittage, et si nécessaire être composés de plusieurs pièces. Une réalisation multi-nuances et/ou multimatériaux n'est pas non plus exclue.

Les deux recirculateurs d'extrémité **30** sont identiques, et présentent un corps annulaire **32** ainsi qu'une structure de guidage **34,** la structure de guidage **34** étant saillante radialement vers l'extérieur, et axialement vers l'écrou **12,** par rapport au corps annulaire **32.**

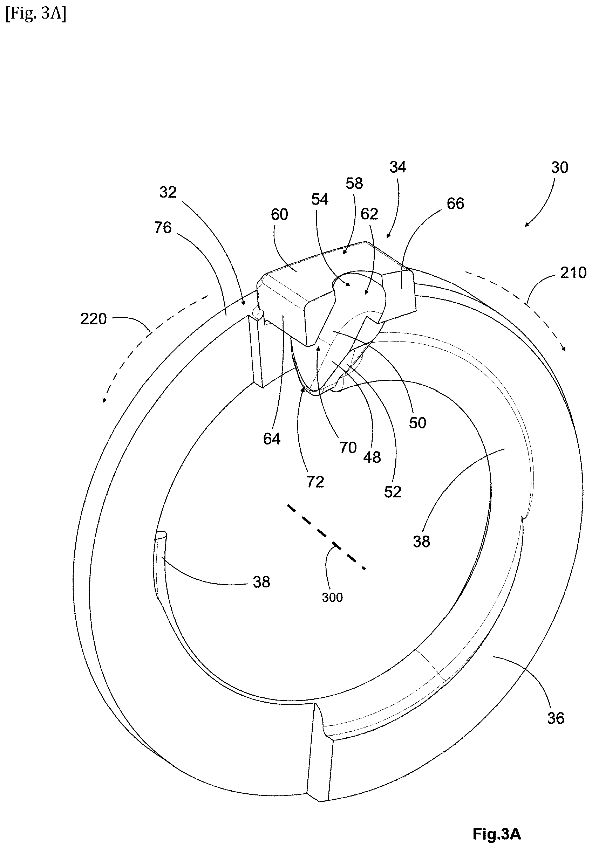

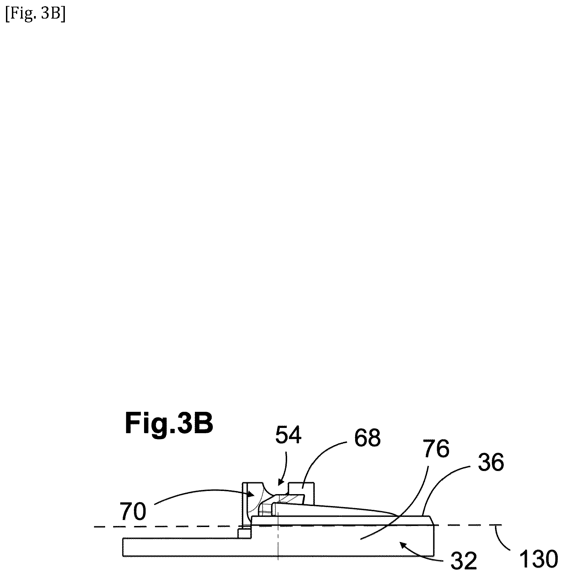

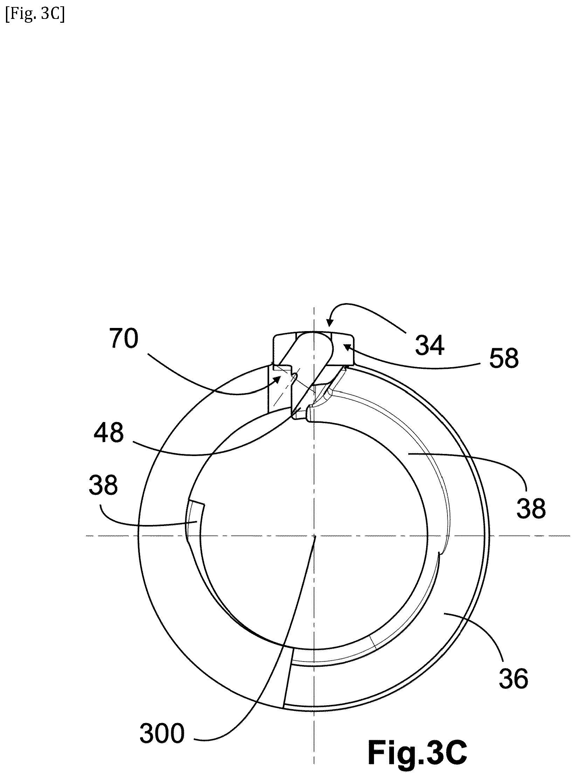

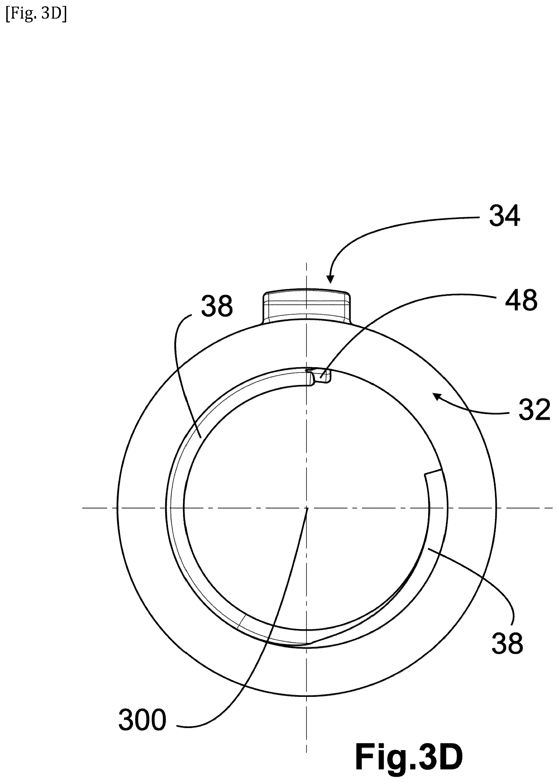

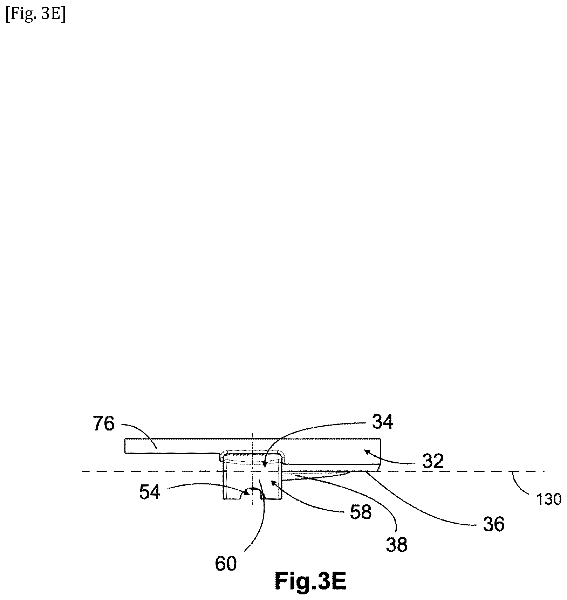

Le corps annulaire **32,** illustré en détail sur les figures 3A, 3B, 3C, 3D et 3E, présente une face annulaire extérieure **76** tournée radialement vers l'extérieur et une face annulaire intérieure **78** tournée radialement vers l'axe de référence **300.** En outre, le corps annulaire **32** comprend une surface d'appui **36** plane dans un plan d'appui **130** et est configurée pour venir en appui contre l'écrou **12,** au niveau de la surface d'accueil **22,** lorsque le recirculateur d'extrémité **30** est en position d'utilisation. La surface d'appui **36** est en forme d'arc annulaire plan s'étendant sur un secteur angulaire autour de l'axe de référence **300,** d'angle au sommet supérieur à π/2 radian, de préférence supérieure à 3π/4, et inférieure à 3π/2, de préférence inférieure à 5π/4, par exemple 7π/6, s'étendant depuis la structure de guidage **34** dans une direction horaire **210.** Le corps annulaire **32** présente en outre une lèvre de joint **38** s'étendant radialement vers l'intérieur depuis le corps annulaire **32** du recirculateur d'extrémité **30.** La lèvre de joint **38** est disposée sur la face annulaire intérieure **78** du recirculateur **30** et forme une contre-forme du chemin de roulement hélicoïdal intérieur **16,** notamment de type homothétie, sans entrer en contact avec la vis **10.**

La structure de guidage **34** présente un corps de positionnement **58** et une écope **48** qui forment un conduit ouvert de guidage **70** des billes le long d'une trajectoire curviligne entre une première extrémité de guidage **62,** ouverte sur le canal de recirculation **18** et une deuxième extrémité de guidage **72** ouverte sur les chemins de roulement **16, 116** de la vis **10** et de l'écrou **12.**

La première extrémité de guidage **62** est saillante axialement par rapport au plan de coupe **130,** tandis que la deuxième extrémité de guidage **72** est en saillie « oblique » entre les chemins de roulement **16, 116** de la vis **10** et de l'écrou **12.** En outre, la deuxième extrémité de guidage **72** est coupée par le plan de coupe **130.**

Plus spécifiquement, le corps de positionnement **58** présente une paroi extérieure **60,** deux parois latérales **64,** deux parois transversales **66** et une paroi intérieure **68.** La paroi extérieure **60** est disposée radialement à l'extérieur des autres parois, tandis que la paroi intérieure **68** est disposée radialement à l'intérieur des autres parois. L'une des deux parois transversales **66** chevauche le corps annulaire **32,** tandis que l'autre paroi transversale, illustrée sur la figure **3A****,** est en saillie axiale par rapport au plan de coupe **130** et forme la première extrémité de guidage **62,** destinée à déboucher sur le canal de recirculation **18.** Le corps de positionnement **58** présente une encoche de guidage **54** ouverte sur la paroi extérieure **60** au niveau de la première extrémité de guidage **62** lorsque le canal de recirculation **18** est, comme dans le cas présent, ouvert.

L'écope **48** forme la deuxième extrémité de guidage **72** du conduit ouvert de guidage **70** et est configurée pour déboucher sur les chemins de roulement **16, 116** de la vis **10** et de l'écrou **12,** et pour rediriger de manière fluide les billes depuis le canal recirculateur **18** vers les chemins de roulement **16, 116** de la vis **10** et de l'écrou **12** et inversement. Pour ce faire, l'écope **48** est orientée radialement et orthoradialement, afin de guider les billes vers le canal recirculateur **18** ou les chemins de roulement **16, 116,** avec le cas échéant une composante axiale minime afin que le guidage des billes par l'écope **48** soit tangent aux chemins de roulement **16, 116** hélicoïdaux. L'écope **48** présente une face de guidage **50,** configurée pour orienter les billes lors de la recirculation de celles-ci, et une face arrière **52,** disposée à l'opposé de la face de guidage **50.** La face de guidage **50** est une gorge dont le profil peut être par exemple en arc de cercle ou en ogive, qui définit une trajectoire de recirculation entre les deux extrémités **62, 72** de la gorge. L'écope **48** est coupée par le plan d'appui **130.** De façon remarquable, les faces de guidages **44, 45** de l'écrou **12** font face à la face de guidage **50** du recirculateur, de sorte que la trajectoire de recirculation est délimitée, sur tout son parcours entre les deux extrémités **62, 72** de la gorge, par la face de guidage **50** du recirculateur d'extrémité **30** et les première et deuxième faces de guidage **44, 45** de l'écrou **12.**

La lèvre de joint **38** s'étend depuis l'écope **48,** sur la face annulaire intérieure **78** du recirculateur d'extrémité **30** en prenant forme au niveau de la face arrière **52** de l'écope **48** dans le même sens de rotation horaire **210** que la surface d'appui **36,** c'est-à-dire dans le sens horaire **210,** sur au moins 1/2 tour d'hélice, de préférence au moins 3/4 de tour d'hélice, sans faire de tour d'hélice complet. La lèvre de joint **38** est coupée par le plan d'appui **130.**

La structure de guidage **34** et le corps annulaire **32** sont respectivement complémentaires de la zone d'accueil **40** et la surface d'accueil **22** de l'écrou **12.**

Les billes peuvent être par exemple réalisées en acier ou en céramique, et sont dimensionnées et positionnées pour circuler en circuit fermé entre le chemin de roulement hélicoïdal extérieur **116** de l'écrou **12** et le chemin de roulement hélicoïdal intérieur **16** de la vis **10,** entre la face de guidage **50** de chaque recirculateur d'extrémité **30** et les première et deuxième faces de recirculation **44, 45** de l'écrou **12** et dans et le canal de recirculation **18,** de préférence sans séparateurs entre les billes.

Lors du montage, les recirculateurs d'extrémité **30** sont insérés axialement dans l'écrou **12,** un recirculateur d'extrémité **30** au niveau de chacune des deux extrémités axiales **20,** ce qui permet au mécanisme de vis à billes **1** de gagner en compacité. Dans la suite de la description du montage, nous détaillerons le positionnement d'un seul recirculateur d'extrémité **30,** cette description s'appliquant naturellement au second recirculateur d'extrémité **30.** Le recirculateur d'extrémité **30** est inséré en force axialement dans l'extrémité axiale **20,** le corps annulaire **32** étant fretté à la face annulaire intérieure **74,** de sorte à être dans la position d'utilisation lorsque la surface d'appui **36** du recirculateur d'extrémité **30** bute contre la surface d'accueil **22.** La surface d'appui **36** est alors en contact avec la surface d'accueil **22** tandis que la face annulaire **76** du recirculateur d'extrémité **30** est en contact avec la face intérieure annulaire **74** de la jupe **24.** La lèvre de joint **38** prolonge le schéma hélicoïdal du filet de l'écrou **12.**

De plus, la structure de guidage **34** est logée dans la zone d'accueil **40** et est en contact avec l'écrou **12.** Plus précisément, la paroi intérieure **68** entre en contact et repose sur les méplats de support **42,** les deux parois latérales **64** ainsi qu'une des deux parois transversales **66** sont en contact avec l'écrou **12,** l'écope **48** repose en contact sur le support d'écope **46,** et au niveau de la première extrémité de guidage **62,** l'écope **48** débouche en contact tangentiel sur la deuxième face de guidage **45** de l'écrou **12,** lui-même débouchant sur la première face de guidage **44** qui débouche sur le canal de recirculation **18.** Les faces de guidage **44, 45** de l'écrou **12** permettent une transition depuis le canal de recirculation **18** vers l'écope **48** du recirculateur d'extrémité **30** et inversement, permettant une trajectoire de recirculation douce entre le canal de recirculation **18** et le recirculateur d'extrémité **30.**

La vis **10** peut être insérée dans l'ensemble formé de l'écrou **12** et des deux recirculateurs d'extrémité **30** par vissage. La lèvre de joint **38** pénètre le chemin de roulement hélicoïdal intérieur **16,** sans entrer en contact, et permet de minimiser la fuite du lubrifiant dans le mécanisme de vis à billes **1,** de la graisse par exemple. Les billes peuvent alors être insérées dans le mécanisme de vis à billes **1** une par une par le canal de recirculation **18.** Les billes cheminent dans les chemins de roulement **16, 116** hélicoïdaux en passant par les recirculateurs d'extrémité **30.** Le mécanisme de vis à billes **1,** illustré sur la figure 4, est ensuite fermé par une douille frettée à la surface extérieure **25** de l'écrou **12,** permettant de fermer le canal de recirculation **18.**

Les exemples représentés sur les figures et discutés ci-dessus ne sont donnés qu'à titre illustratif. D'autres modes de réalisation peuvent être envisagés, notamment en combinant les caractéristiques des différents exemples de réalisation illustrés.

Par exemple, le recirculateur d'extrémité **30** peut présenter, au niveau de la face d'appui **36,** un téton comprenant un chanfrein et une lèvre, permettant de s'encliqueter dans une contre-forme correspondante située dans la face d'accueil **22** de l'écrou **12.**

## Revendications

1. Recirculateur (30) pour un écrou (12) d'un mécanisme de vis à billes (1), le recirculateur (30) comprenant un corps annulaire (32) autour d'un axe de référence (300) du recirculateur (30) destiné à être aligné avec un axe d'hélice de l'écrou (12), le corps annulaire (32) comprenant une surface d'appui (36) configurée pour venir en appui contre un écrou (12) du mécanisme de vis à billes (1) dans une direction d'appui ayant une composante axiale parallèle à l'axe de référence (300), et une structure de guidage (34) configurée pour guider des billes dans une trajectoire de recirculation ayant une première extrémité de guidage (62) configurée pour déboucher dans un canal de recirculation de l'écrou (12) et une deuxième extrémité de guidage (72) configurée pour déboucher sur un chemin de roulement (116) défini par un filetage de l'écrou (12), la surface d'appui (36) étant au moins partiellement située dans un plan de coupe (130) coupant la trajectoire de recirculation et perpendiculaire à l'axe de référence (300), **caractérisé en ce que** la deuxième extrémité de guidage (72) de la structure de guidage (34) s'étend de part et d'autre du plan de coupe (130).

2. Recirculateur (30) selon la revendication 1, **caractérisé en ce que** la surface d'appui (36) est plane.

3. Recirculateur (30) selon l'une quelconque des revendications précédentes, **caractérisé en ce que** la surface d'appui (36) s'étend sur un secteur angulaire autour de l'axe de référence (300), qui est sans intersection avec la trajectoire de recirculation,

4. Recirculateur (30) selon la revendication 3, **caractérisé en ce que** le secteur angulaire ayant de préférence un angle au sommet supérieur à π/2 radians, de préférence supérieur à 3π/4 radians, et inférieur à 3π/2 radians, de préférence inférieur à 5π/4 radians, par exemple 7π/6 radians.

5. Recirculateur (30) selon l'une quelconque des revendications précédentes, **caractérisé en ce que** la structure de guidage (34) est en saillie radialement vers l'extérieur du corps annulaire (32).

6. Recirculateur (30) selon l'une quelconque des revendications précédentes, **caractérisé en ce que** la première extrémité de guidage (62) de la structure de guidage (34) est saillante, notamment axialement, par rapport au corps annulaire (32).

7. Recirculateur (30) selon l'une quelconque des revendications précédentes, **caractérisé en ce que** la deuxième extrémité de guidage (72) de la structure de guidage (34) est formée par une écope (48), l'écope (48) étant de préférence en saillie dans une direction configurée pour être tangente à un chemin de roulement (116) de l'écrou.

8. Recirculateur (30) selon l'une quelconque des revendications précédentes, **caractérisé en ce que** la trajectoire de recirculation au niveau de la première extrémité de guidage (62) est perpendiculaire au plan d'appui (130).

9. Recirculateur (30) selon l'une quelconque des revendications précédentes, **caractérisé en ce que** le corps annulaire (32) comprend une lèvre de joint (38) s'étendant radialement vers l'intérieur depuis le corps annulaire (32) du recirculateur (30),

10. Recirculateur (30) selon la revendication 9, **caractérisé en ce que** la lèvre de joint (38) a une forme hélicoïdale, la lèvre de joint (38) réalisant de préférence au moins 1/2 tour d'hélice, de préférence au moins 3/4 de tour d'hélice.

11. Recirculateur (30) selon l'une quelconque des revendications précédentes, **caractérisé en ce qu'**il est monobloc, de préférence en plastique.

12. Recirculateur (30) selon l'une quelconque des revendications précédentes, **caractérisé en ce qu'**il peut être moulé sans contre-dépouille.

13. Mécanisme de vis à billes (1) comprenant :
- une vis (10), présentant un chemin de roulement hélicoïdal intérieur (16) et un axe central (110);
- un écrou (12), présentant un chemin de roulement hélicoïdal extérieur (116) et un canal de recirculation (18) ;
- au moins deux billes disposées entre le chemin de roulement hélicoïdal intérieur (16) de la vis (10) à billes et le chemin de roulement hélicoïdal extérieur (116) de l'écrou (12) ;
- au moins un recirculateur d'extrémité (30) disposé à l'une des extrémités axiales (20) de l'écrou (12) pour assurer la recirculation des billes, le recirculateur d'extrémité comprenant une surface d'appui (36) contre l'écrou (12) et une structure de guidage (34) pour maintenir les billes dans une trajectoire de recirculation définie ;
**caractérisé en ce que** le recirculateur d'extrémité (30) est selon l'une quelconque des revendications précédentes.

14. Mécanisme de vis à billes (1) selon la revendication 13, **caractérisé en ce que** l'extrémité axiale (20) présente une surface d'accueil (22) en contact avec la surface d'appui (36) du recirculateur (30), la surface d'appui (36) du recirculateur (30) et la surface d'accueil (22) de l'écrou (12) présentant des géométries complémentaires, l'extrémité axiale (20) comportant de préférence une jupe annulaire (24) en saillie axiale par rapport à la surface d'accueil (22), la jupe annulaire (24) et la surface d'accueil (22) délimitant de préférence un volume dans lequel est logé au moins partiellement, et de préférence totalement, le corps annulaire (32) du recirculateur (30), la jupe annulaire (24) présentant de préférence une encoche (26) radiale dans la continuité du canal de recirculation (18).

15. Mécanisme de vis à billes (1) selon la revendication 14, **caractérisé en ce que** le recirculateur d'extrémité (30) comporte une ou plusieurs faces de guidage (50) faisant face à une ou plusieurs faces de guidage (44, 45) de l'écrou (12) pour délimiter la trajectoire de recirculation entre les deux extrémités (62, 72).

## Patentansprüche

1. Umlaufführung (30) für eine Mutter (12) eines Kugelgewindespindelmechanismus (1), wobei die Umlaufführung (30) einen ringförmigen Körper (32) um eine Referenzachse (300) der Umlaufführung (30) umfasst, die dazu bestimmt ist, mit einer Schraubenachse der Mutter (12) ausgerichtet zu werden, wobei der ringförmige Körper (32) eine Auflagefläche (36) umfasst, die konfiguriert ist, um gegen eine Mutter (12) des Kugelgewindespindelmechanismus (1) in einer Auflagerichtung anzuliegen, die eine axiale Komponente parallel zu der Referenzachse (300) aufweist, und eine Führungsstruktur (34), die konfiguriert ist, um Kugeln in einer Umlaufbahn zu führen, die ein erstes Führungsende (62), das konfiguriert ist, um in einen Umlaufkanal der Mutter (12) zu münden, und ein zweites Führungsende (72) aufweist, das konfiguriert ist, um auf eine Laufbahn (116) zu münden, die durch ein Gewinde der Mutter (12) definiert ist, wobei die Auflagefläche (36) zumindest teilweise in einer Schnittebene (130) angeordnet ist, welche die Umlaufbahn schneidet und senkrecht zu der Referenzachse (300) steht,
**dadurch gekennzeichnet, dass** sich das zweite Führungsende (72) der Führungsstruktur (34) beiderseits der Schnittebene (130) erstreckt.

2. Umlaufführung (30) nach Anspruch 1, **dadurch gekennzeichnet, dass** die Auflagefläche (36) planar ist.

3. Umlaufführung (30) nach einem der vorstehenden Ansprüche,
**dadurch gekennzeichnet, dass** sich die Auflagefläche (36) über einen Winkelsektor um die Referenzachse (300) erstreckt, die keine Schnittlinie mit der Umlaufbahn aufweist.

4. Umlaufführung (30) nach Anspruch 3, **dadurch gekennzeichnet, dass** der Winkelsektor vorzugsweise einen Scheitelwinkel größer als π/2 Radiant, vorzugsweise größer als 3π/4 Radiant, und kleiner als 3π/2 Radiant, vorzugsweise kleiner als 5π/4 Radiant, zum Beispiel 7π/6 Radiant, aufweist.

5. Umlaufführung (30) nach einem der vorstehenden Ansprüche,
**dadurch gekennzeichnet, dass** die Führungsstruktur (34) radial nach außen von dem ringförmigen Körper (32) vorsteht.

6. Umlaufführung (30) nach einem der vorstehenden Ansprüche,
**dadurch gekennzeichnet, dass** das erste Führungsende (62) der Führungsstruktur (34) relativ zu dem ringförmigen Körper (32) vorsteht, insbesondere axial.

7. Umlaufführung (30) nach einem der vorstehenden Ansprüche,
**dadurch gekennzeichnet, dass** das zweite Führungsende (72) der Führungsstruktur (34) durch eine Schöpfvorrichtung (48) gebildet ist, wobei die Schöpfvorrichtung (48) vorzugsweise in eine Richtung vorsteht, die konfiguriert ist, um tangential zu einer Laufbahn (116) der Mutter zu verlaufen.

8. Umlaufführung (30) nach einem der vorstehenden Ansprüche,
**dadurch gekennzeichnet, dass** die Umlaufbahn im Bereich des ersten Führungsendes (62) senkrecht zu der Auflagefläche (130) verläuft.

9. Umlaufführung (30) nach einem der vorstehenden Ansprüche,
**dadurch gekennzeichnet, dass** der ringförmige Körper (32) eine Dichtungslippe (38) umfasst, die sich radial nach innen von dem ringförmigen Körper (32) der Umlaufführung (30) erstreckt.

10. Umlaufführung (30) nach Anspruch 9, **dadurch gekennzeichnet, dass** die Dichtungslippe (38) eine schraubenförmige Form aufweist, wobei die Dichtungslippe (38) vorzugsweise mindestens eine 1/2 Schraubenumdrehung, vorzugsweise mindestens eine 3/4 Schraubenumdrehung, ausführt.

11. Umlaufführung (30) nach einem der vorstehenden Ansprüche,
**dadurch gekennzeichnet, dass** sie einteilig, vorzugsweise aus Plastik, ist.

12. Umlaufführung (30) nach einem der vorstehenden Ansprüche,
**dadurch gekennzeichnet, dass** sie ohne Hinterschneidung geformt werden kann.

13. Kugelgewindespindelmechanismus (1), umfassend:
- eine Schraube (10), die eine innere schraubenförmige Laufbahn (16) und eine Mittelachse (110) aufweist;
- eine Mutter (12), die eine äußere schraubenförmige Laufbahn (116) und einen Umlaufkanal (18) aufweist;
- mindestens zwei Kugeln, die zwischen der inneren schraubenförmigen Laufbahn (16) der Kugelgewindespindel (10) und der äußeren schraubenförmigen Laufbahn (116) der Mutter (12) angeordnet sind;
- mindestens eine Endumlaufführung (30), die an einem der axialen Enden (20) der Mutter (12) angeordnet ist, um den Umlauf der Kugeln sicherzustellen, wobei die Endumlaufführung eine Auflagefläche (36) gegen die Mutter (12) und eine Führungsstruktur (34) umfasst, um die Kugeln in einer definierten Umlaufbahn zu halten;
**dadurch gekennzeichnet, dass** die Endumlaufführung (30) nach einem der vorstehenden Ansprüche ausgebildet ist.

14. Kugelgewindespindelmechanismus (1) nach Anspruch 13,
**dadurch gekennzeichnet, dass** das axiale Ende (20) eine Aufnahmefläche (22) in Kontakt mit der Auflagefläche (36) der Umlaufführung (30) aufweist, wobei die Auflagefläche (36) der Umlaufführung (30) und die Aufnahmefläche (22) der Mutter (12) komplementäre Geometrien aufweisen, wobei das axiale Ende (20) vorzugsweise eine ringförmige Hülse (24) umfasst, die relativ zu der Aufnahmefläche (22) axial vorsteht, wobei die ringförmige Hülse (24) und die Aufnahmefläche (22) vorzugsweise ein Volumen begrenzen, in dem zumindest teilweise, und vorzugsweise vollständig, der ringförmige Körper (32) der Umlaufführung (30) untergebracht ist, wobei die ringförmige Hülse (24) vorzugsweise eine radiale Kerbe (26) in der Kontinuität des Umlaufkanals (18) aufweist.

15. Kugelgewindespindelmechanismus (1) nach Anspruch 14,
**dadurch gekennzeichnet, dass** die Endumlaufführung (30) eine oder mehrere Führungsflächen (50) umfasst, die einer oder mehreren Führungsflächen (44, 45) der Mutter (12) gegenüberliegen, um die Umlaufbahn zwischen den beiden Enden (62, 72) zu begrenzen.

## Claims

1. A recirculator (30) for a nut (12) of a ball screw mechanism (1), the recirculator (30) comprising an annular body (32) about a reference axis (300) of the recirculator (30) intended to be aligned with a helix axis of the nut (12), the annular body (32) comprising a bearing surface (36) configured to bear against a nut (12) of the ball screw mechanism (1) in a bearing direction having an axial component parallel to the reference axis (300), and a guide structure (34) configured to guide balls in a recirculation path having a first guide end (62) configured to open into a recirculation channel of the nut (12) and a second guide end (72) configured to open onto a raceway (116) defined by a thread of the nut (12), wherein the bearing surface (36) is at least partially located in a section plane (130) intersecting the recirculation path and perpendicular to the reference axis (300), **characterized in that** the second guide end (72) of the guide structure (34) extends on both sides of the section plane (130).

2. The recirculator (30) according to claim 1, **characterized in that** the bearing surface (36) is flat.

3. The recirculator (30) according to any one of the preceding claims, **characterized in that** the bearing surface (36) extends over an angular sector about the reference axis (300), which does not intersect the recirculation path.

4. The recirculator (30) according to claim 3, **characterized in that** the angular sector has an apex angle greater than π/2 radians, preferably greater than 3π/4 radians, and less than 3π/2 radians, preferably less than 5π/4 radians, for example 7π/6 radians.

5. The recirculator (30) according to any one of the preceding claims, **characterized in that** the guide structure (34) projects radially outwards from the annular body (32).

6. The recirculator (30) according to any one of the preceding claims, **characterized in that** the first guide end (62) of the guide structure (34) projects, in particular axially, with respect to the annular body (32).

7. The recirculator (30) according to any one of the preceding claims, **characterized in that** the second guide end (72) of the guide structure (34) is formed by a scoop (48), wherein the scoop (48) preferably projects in a direction configured to be tangent to a raceway (116) of the nut.

8. The recirculator (30) according to any one of the preceding claims, **characterized in that** the recirculation path at the first guide end (62) is perpendicular to the bearing plane (130).

9. The recirculator (30) according to any one of the preceding claims, **characterized in that** the annular body (32) comprises a sealing lip (38) extending radially inwards from the annular body (32) of the recirculator (30).

10. The recirculator (30) according to claim 9, **characterized in that** the sealing lip (38) is helical, wherein the sealing lip (38) preferably performs at least a 1/2 helix turn, preferably at least 3/4 of a helix turn.

11. The recirculator (30) according to any one of the preceding claims, **characterized in that** it is in one piece, preferably made of plastic.

12. The recirculator (30) according to any one of the preceding claims, **characterized in that** it can be molded without undercuts.

13. A ball screw mechanism (1) comprising:
- a screw (10), with an inner helical raceway (16) and a central axis (110);
- a nut (12) with an external helical raceway (116) and a recirculation channel (18);
- at least two balls arranged between the inner helical raceway (16) of the ball screw (10) and the outer helical raceway (116) of the nut (12);
- at least one end recirculator (30) arranged at one of the axial ends (20) of the nut (12) for recirculating the balls, the end recirculator comprising a bearing surface (36) against the nut (12) and a guide structure (34) for holding the balls in a defined recirculation path;
**characterized in that** the end recirculator (30) is according to any one of the preceding claims.

14. The ball screw mechanism (1) according to claim 13, **characterized in that** the axial end (20) has a receiving surface (22) in contact with the bearing surface (36) of the recirculator (30), the bearing surface (36) of the recirculator (30) and the receiving surface (22) of the nut (12) having complementary geometries, wherein the axial end (20) preferably comprises an annular skirt (24) projecting axially with respect to the receiving surface (22), the annular skirt (24) and the receiving surface (22) delimiting a volume wherein the annular body (32) of the recirculator (30) is at least partially, and preferably totally, housed, wherein the annular skirt (24) preferably has a radial notch (26) in continuity with the recirculation channel (18).

15. The ball screw mechanism (1) according to claim 14, **characterized in that** the end recirculator (30) has one or more guide faces (50) facing one or more guide faces (44, 45) of the nut (12) to delimit the recirculation path between the two ends (62, 72).
